# EUROPEAN PATENT APPLICATION

(11) **EP 4 733 886 A1**
(43) Date of publication of application: **29.04.2026**
(21) Application number: 25150903.0
(22) Date of filing: 09.01.2025
(51) Int. Cl.: G06F 1/16, H04M 1/02

(54) **BENDABLE HINGE FOR FOLDABLE MOBILE PHONE**

(30) Priority: 28.10.2024 CN 202422600540 U
(71) Applicant: Shenzhen Frog Technology Co., Ltd, Shenzhen 518000 (CN)
(72) Inventor: Wu, Qiang, 518000 Shenzhen (CN)
(74) Representative: Murgitroyd & Company

(57) **Abstract**

The present disclosure relates to a bendable hinge for a foldable mobile phone. The bendable hinge mainly includes a connecting plate, a gear assembly, a swing arm assembly, and a connecting shell. In the gear assembly, three gear bases are vertically arranged, and transmission stability is ensured through fitting between shaft rods and square wire springs. Two gear shafts are engaged with first swing arms to achieve precise transmission. The swing arm assembly includes a swing arm base and second swing arms, and the second swing arms are connected to slideways through arc-shaped parts and arc-shaped grooves that are in fit, to ensure smoothness and precision of swinging. As a bridge, the connecting shell is configured to tightly connect a mobile phone surface to the swing arm and the gear assembly. Through cooperative work of the gear assembly and the swing arm assembly, in this design, precise control on a swing arm torque is achieved, a swing arm load is effectively relieved, and precision and smoothness of a folding action are improved. Therefore, a user can easily enjoy a complete folding effect from 0° to 180°, and stability and reliability in folding and unfolding processes are ensured.

## Description

### TECHNICAL FIELD

The present disclosure relates to hinges, and in particular, relates to a bendable hinge for a foldable mobile phone.

### BACKGROUND

With continuous progress of communication technologies and diversification of consumer requirements, a foldable mobile phone, as a new intelligent terminal that integrates portability and large-screen experience, has attracted wide attention in the market in recent years. However, as a core component, the bendable hinge of the foldable mobile phone is directly related to a folding effect, durability, and user experience of the foldable mobile phone.

A traditional bendable hinge design usually has problems such as an inaccurate folding angle, an unsmooth folding action, and a swing arm load, affecting overall performance of the foldable mobile phone.

### SUMMARY

In view of this, to resolve at least one of the foregoing problems, it is necessary to provide a bendable hinge for a foldable mobile phone, including:
a connecting plate;
a gear assembly including three gear bases, two gear shafts, shaft rods, square wire springs, and two first swing arms, where the three gear bases are vertically arranged on the connecting plate in sequence, the shaft rods penetrate the three gear bases, the square wire springs are sleeved on the shaft rods and are located between a first gear base and a second gear base, the two gear shafts are disposed between the second gear base and a third gear base, and the two first swing arms are respectively disposed on two sides of the connecting plate, and are engaged with the gear shafts;
a swing arm assembly including a swing arm base and second swing arms, where the swing arm base is disposed on the connecting plate, arc-shaped grooves are provided on two sides of the swing arm base, arc-shaped slideways are disposed on upper and lower ends of the arc-shaped groove, the second swing arm is disposed on the swing arm base, an arc-shaped part that fits the arc-shaped groove in shape is disposed on the second swing arm, and arc-shaped sliding grooves that fit the arc-shaped slideways are provided on upper and lower ends of the second swing arm; and
a connecting shell, where the connecting shell is connected to the second swing arm and the first swing arm, and is configured to connect to a mobile phone surface.

Preferably, the first swing arm is in cam connection to the gear base.

Preferably, a central-axis plate is further included. The central-axis plate is disposed on a central axis of the connecting plate, and is connected to the gear assembly and the swing arm assembly.

Preferably, one end of the shaft rod penetrates the swing arm base.

Preferably, the swing arm base is in threaded connection to the connecting plate.

Preferably, the connecting shell is provided with a through hole and fixedly provided with a connecting rod, where a shape of the first swing arm is adaptive to a shape of the through hole on a part where the first swing arm is connected to the through hole, the first swing arm penetrates the through hole, one end of the second swing arm is provided with a through connecting hole, and the connecting rod penetrates the connecting hole.

Preferably, a cross section of the through hole is in a convex shape.

### BRIEF DESCRIPTION OF THE DRAWINGS

1, connecting plate; 2, gear assembly; 21, gear base; 22, gear shaft; 23, shaft rod; 24, square wire spring; 25, first swing arm; 3, swing arm assembly; 31, swing arm base; 311, arc-shaped groove; 312, arc-shaped slideway; 32, second swing arm; 321, arc-shaped part; 4, connecting shell; 41, through hole; 42, connecting rod; and 5, central-axis plate.
FIG. 1 is a schematic structural diagram of a bendable hinge for a foldable mobile phone according to an embodiment of the present disclosure from a first perspective;
FIG. 2 is a schematic structural diagram of a bendable hinge for a foldable mobile phone according to an embodiment of the present disclosure from a second perspective;
FIG. 3 is a schematic structural diagram of a gear assembly and a swing arm assembly according to an embodiment of the present disclosure;
FIG. 4 is a schematic structural diagram of a gear assembly according to an embodiment of the present disclosure;
FIG. 5 is a schematic structural diagram of a swing arm assembly according to an embodiment of the present disclosure; and
FIG. 6 is a schematic structural diagram of a connecting shell according to an embodiment of the present disclosure.

### DETAILED DESCRIPTION OF THE EMBODIMENTS

To make the objectives, technical solutions and the advantages of the present disclosure clearer, a bendable hinge for a foldable mobile phone in the present disclosure is described in further detail below with reference to the drawings and embodiments. Understandably, the described specific embodiments are merely intended to explain the present disclosure, rather than to limit the present disclosure.

It should be understood that in the description of the present disclosure, "a plurality of" means two or more, orientation or position relationships indicated by "central", "longitudinal", "transverse" "upper", "lower", "rear", "left", "right", "inner", "outer", "front end", "rear end", "head", "tail", "vertical", "horizontal", "top", "bottom", "inside", "outside", and the like are the orientation or position relationships based on the drawings. They are merely intended to facilitate and simplify the description of the present disclosure, rather than to indicate or imply that the mentioned apparatus or components must have a specific orientation or must be constructed and operated in a specific orientation. Therefore, these terms should not be construed as a limitation to the present disclosure. Moreover, the terms "first", "second", and "third" are merely used for description, and are not intended to indicate or imply relative importance.

In the description of the present disclosure, it should be noted that, unless otherwise clearly specified, meanings of terms "install", "connected with", and "connected to" should be understood in a board sense. For example, the connection may be a fixed connection, a removable connection, or an integral connection; may be a mechanical connection or an electrical connection; may be a direct connection or an indirect connection by using an intermediate medium; or may be intercommunication between two components. Those of ordinary skill in the art may understand specific meanings of the above terms in the present disclosure based on a specific situation.

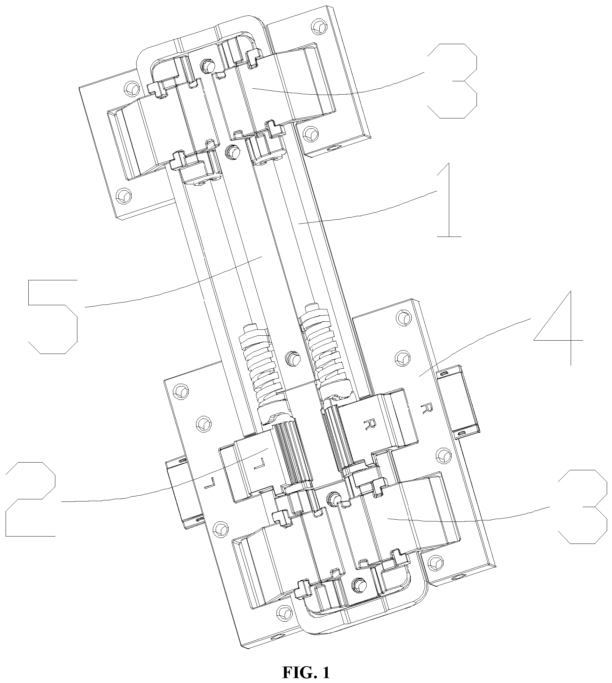

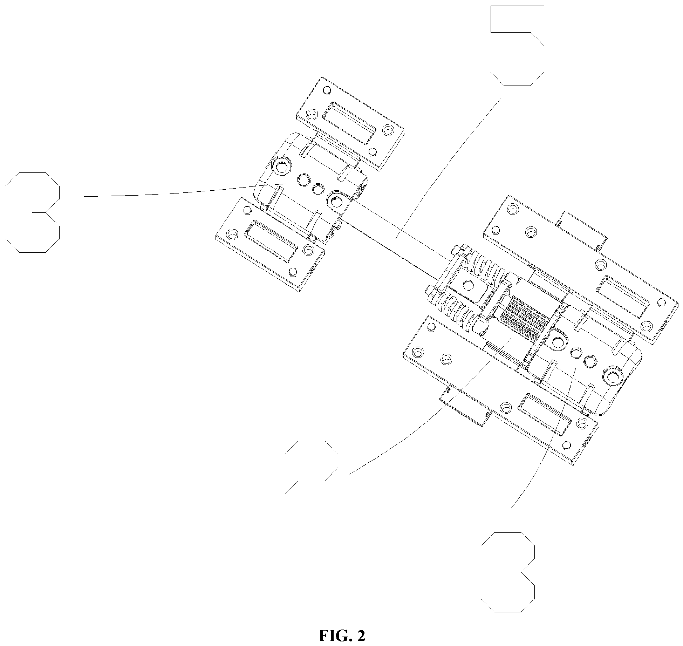

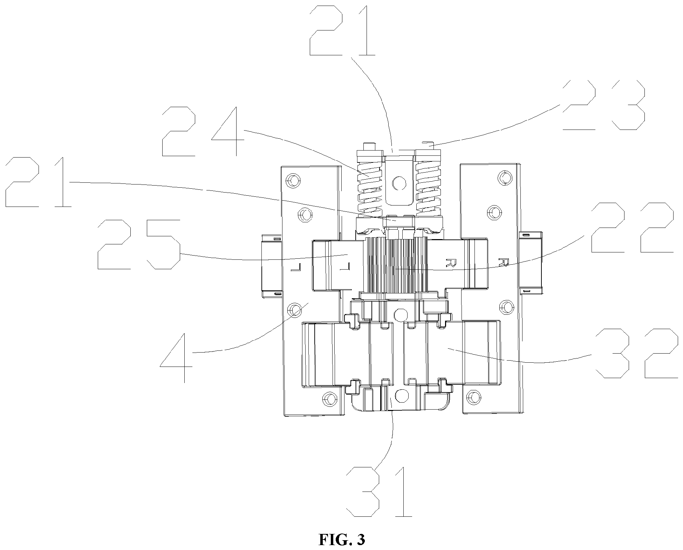

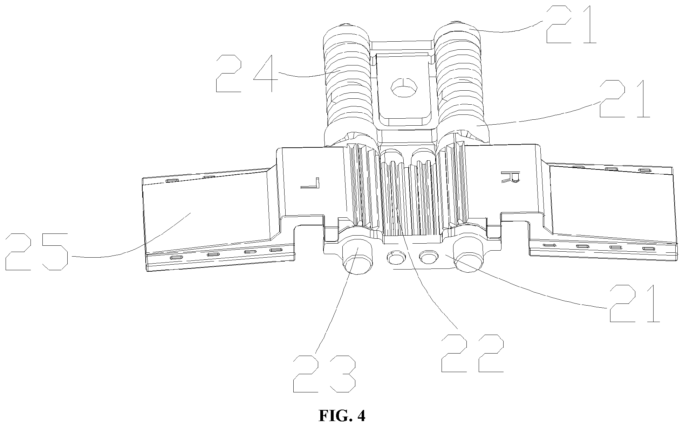

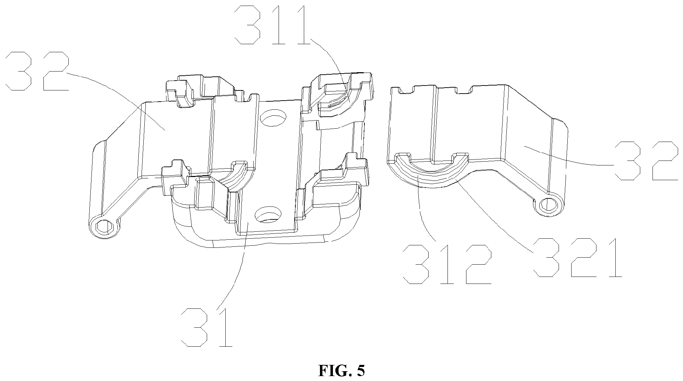

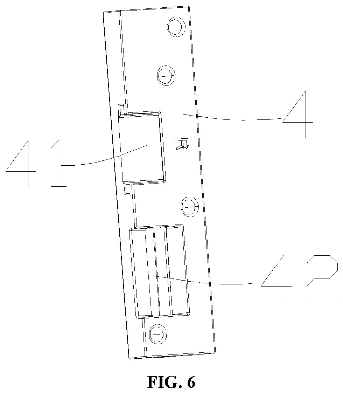

Refer to FIG. 1 to FIG. 6. A bendable hinge for a foldable mobile phone provided in embodiments of the present disclosure includes a connecting plate 1, a gear assembly 2, and a swing arm assembly 3. The gear assembly 2 includes three gear bases 21, two gear shafts 22, shaft rods 23, square wire springs 24, and two first swing arms 25. The three gear bases 21 are vertically arranged on the connecting plate 1 in sequence. The shaft rods 23 penetrate the three gear bases 21. The square wire springs 24 are sleeved on the shaft rods 23 and are located between a first gear base 21 and a second gear base 21, the two gear shafts 22 are disposed between the second gear base 21 and a third gear base 21, and the two first swing arms 25 are respectively disposed on two sides of the connecting plate 1, and are engaged with the gear shafts 22. The swing arm assembly 3 includes a swing arm base 31 and second swing arms 32. The swing arm base 31 is disposed on the connecting plate 1, arc-shaped grooves 311 are provided on two sides of the swing arm base 31, arc-shaped slideways 312 are disposed on upper and lower ends of the arc-shaped groove 311, the second swing arm 32 is disposed on the swing arm base 31, an arc-shaped part 321 that fits the arc-shaped groove 311 in shape is disposed on the second swing arm 32, and arc-shaped sliding grooves that fit the arc-shaped slideways 312 are provided on upper and lower ends of the second swing arm 32. The connecting shell 4 is connected to the second swing arm 32 and the first swing arm 25, and is configured to connect to a mobile phone surface.

In the foregoing embodiments, an objective of the bendable hinge for the foldable mobile phone is to achieve precise folding and unfolding of the mobile phone surface within a range of 0° to 180° and reduce a load of the swing arm in the processes. A core structure of the bendable hinge includes the connecting plate 1, the gear assembly 2, the swing arm assembly 3, and the connecting shell 4.

As a supporting basis of the entire bendable hinge, the connecting plate 1 is configured to fix and connect other components. The gear assembly 2 includes three gear bases 21 that are vertically arranged in sequence, shaft rods 23 that penetrate the three gear bases 21, square wire springs 24 that are sleeved on the shaft rods 23 and are located between the first gear base 21 and the second gear base 21, two gear shafts 22 that are disposed between the second gear base 21 and the third gear base 21, and two first swing arms 25 that are engaged with the gear shafts 22. Through this design, stability and precision of the gear assembly 2 are ensured.

The square wire spring 24 not only can be configured to provide an elastic force in the gear assembly 2, but also can be configured to buffer in the folding and unfolding processes, reducing a load of the swing arm. The two gear shafts 22 are engaged with each other to drive the two first swing arms 25 to swing. This makes motion of the swing arm be more precise and stable.

The swing arm assembly 3 is further configured to improve a folding effect of the bendable hinge. The swing arm base 31 is disposed on the connecting plate 1, and the arc-shaped grooves 311 are designed on two sides of the swing arm base 31. The arc-shaped slideways 312 are further delicately disposed on the upper and lower ends of the arc-shaped grooves 311. The second swing arm 32 is disposed on the swing arm base 31, and completely fits the arc-shaped groove 311 in shape, ensuring stability of the swing arm. In addition, the arc-shaped sliding grooves that fit the arc-shaped slideways 312 are further disposed on upper and lower ends of the second swing arm 32. Through this design, the swing arm is smoother in the swinging process, and friction and resistance are reduced.

Through cooperative work of the gear assembly 2 and the swing arm assembly 3, precise control on a swing arm torque is achieved. In the folding and unfolding processes of the mobile phone, the gear assembly 2 provides a stable drive force to the swing arm assembly 3 through precise transmission, such that the load of the swing arm is reduced, and precision is improved. Through this design, stability and smoothness in the folding and unfolding processes of the mobile phone are ensured, and the complete folding effect of 0° to 180° is further achieved.

Finally, the connecting shell 4, as external package, of the entire bendable hinge, achieves the effects of connecting to the mobile phone surface and fixing the components. The connecting shell 4 is tightly connected to the second swing arm 32 and the first swing arm 25 to form a stable overall structure, ensuring reliability and durability of the bendable hinge.

Refer to FIG. 1 to FIG. 6. In another embodiment, the first swing arm 25 is in cam connection to the gear base 21.

In the foregoing embodiment, in the bendable hinge design of the foldable mobile phone, the first swing arm 25 is in cam connection to the gear base 21. In this connection manner, the first swing arm 25 is driven by the gear shaft 22 to swing along a special cam outline. In the folding or unfolding process of the mobile phone, the cam connection can generate a feeling of stalling, such that a user can obviously sense a folding or unfolding action. In this way, operation experience is improved.

Refer to FIG. 1 to FIG. 6. In another embodiment, the bendable hinge for a foldable mobile phone further includes a central-axis plate 5. The central-axis plate 5 is disposed on a central axis of the connecting plate 1, and is connected to the gear assembly 2 and the swing arm assembly 3.

In the foregoing embodiment, the central-axis plate 5 is configured to ensure connection among the gear shaft 22, the shaft rod 23, and the square wire spring 24. In this way, the swing arm assembly 3 and the gear assembly 2 are precisely located on a straight line. Through this design, a spatial layout of the bendable hinge is optimized, and synchronization and coordination of the swing arm assembly 3 and the gear assembly 2 in the swinging process are ensured, such that stability and precision during folding or unfolding of the mobile phone are achieved.

Refer to FIG. 1 to FIG. 6. In another embodiment, one end of the shaft rod 23 penetrates the swing arm base 31.

In the forgoing embodiment, one end of the shaft rod 23 penetrates the three gear bases 21, and further penetrates the swing arm base 31. Through this design, the swing arm assembly 3 and the gear assembly 2 are located on a straight line, improving overall stability of the bendable hinge and precision of a folding action.

Refer to FIG. 1 to FIG. 6. In another embodiment, the swing arm base 31 is in threaded connection to the connecting plate 1.

In the foregoing embodiment, stable mounting of the swing arm base 31 is ensured.

Refer to FIG. 1 to FIG. 6. In another embodiment, the connecting shell 4 is provided with a through hole 41 and fixedly provided with a connecting rod 42. A shape of the first swing arm 25 is adaptive to a shape of the through hole 41 on a part where the first swing arm 25 is connected to the through hole 41. The first swing arm 25 penetrates the through hole 41, one end of the second swing arm 32 is provided with a through connecting hole, and the connecting rod 42 penetrates the connecting hole.

In the foregoing embodiment, the shape of the first swing arm 25 is adaptive to the shape of the through hole 41 on the part where the first swing arm 25 is connected to the through hole 41, that is, the shape of the first swing 25 is adaptive to the shape of the through hole 41, such that the first swing arm 25 can penetrate the through hole 41, to connect the swing arm assembly 3 to the connecting shell 4.

In addition, the connecting rod 42 is further fixedly disposed on the connecting shell 4. The through connecting hole is provided on an end of the second swing arm 32, and a shape of the through connecting hole is adaptive to a shape of the connecting rod 42, such that the connecting rod 42 can penetrate the connecting hole. Through this connection manner, connection firmness between the second swing arm 32 and the connecting shell 4 is ensured, and a stable motion track of the swing arm assembly 3 in the folding and unfolding processes can be kept. In this way, working efficiency and stability of the entire bendable hinge are improved, and a service life of the mobile phone is further prolonged.

Refer to FIG. 1 to FIG. 6. In another embodiment, a cross section of the through hole 41 is in a convex shape.

In the foregoing embodiment, connection between the first swing arm 25 and the through hole 41 can be ensured to be more stable, and the swing arm is prevented from shaking or falling off in the swinging process. In addition, the first swing arm 25 is conveniently located and mounted, and assembly efficiency and assembly precision are improved.

The above embodiments are only preferred ones of the present disclosure, and are not intended to limit the present disclosure in any form. Although the present disclosure has been disclosed by the foregoing embodiments, these embodiments are not intended to limit the present disclosure. Any person skilled in the art may make some changes or modifications to implement equivalent embodiments with equivalent changes by using the technical contents disclosed above without departing from the scope of the technical solution of the present disclosure. Any simple modification, equivalent change and modification made to the foregoing embodiments according to the technical essence of the present disclosure without departing from the content of the technical solution of the present disclosure shall fall within the scope of the technical solution of the present disclosure.

## Claims

1. A bendable hinge for a foldable mobile phone, comprising:
a connecting plate;
a gear assembly comprising three gear bases, two gear shafts, shaft rods, square wire springs, and two first swing arms, wherein the three gear bases are vertically arranged on the connecting plate in sequence, the shaft rods penetrate the three gear bases, the square wire springs are sleeved on the shaft rods and are located between a first gear base and a second gear base, the two gear shafts are disposed between the second gear base and a third gear base, and the two first swing arms are respectively disposed on two sides of the connecting plate, and are engaged with the gear shafts;
a swing arm assembly comprising a swing arm base and second swing arms, wherein the swing arm base is disposed on the connecting plate, arc-shaped grooves are provided on two sides of the swing arm base, arc-shaped slideways are disposed on upper and lower ends of the arc-shaped groove, the second swing arm is disposed on the swing arm base, an arc-shaped part that fits the arc-shaped groove in shape is disposed on the second swing arm, and arc-shaped sliding grooves that fit the arc-shaped slideways are provided on upper and lower ends of the second swing arm; and
a connecting shell, wherein the connecting shell is connected to the second swing arm and the first swing arm, and is configured to connect to a mobile phone surface.

2. The bendable hinge for a foldable mobile phone according to claim 1, wherein the first swing arm is in cam connection to the gear base.

3. The bendable hinge for a foldable mobile phone according to claim 1, further comprising a central-axis plate, wherein the central-axis plate is disposed on a central axis of the connecting plate, and is connected to the gear assembly and the swing arm assembly.

4. The bendable hinge for a foldable mobile phone according to claim 1, wherein one end of the shaft rod penetrates the swing arm base.

5. The bendable hinge for a foldable mobile phone according to claim 1, wherein the swing arm base is in threaded connection to the connecting plate.

6. The bendable hinge for a foldable mobile phone according to claim 1, wherein the connecting shell is provided with a through hole and fixedly provided with a connecting rod, a shape of the first swing arm is adaptive to a shape of the through hole on a part where the first swing arm is connected to the through hole, the first swing arm penetrates the through hole, one end of the second swing arm is provided with a through connecting hole, and the connecting rod penetrates the connecting hole.

7. The bendable hinge for a foldable mobile phone according to claim 6, wherein a cross section of the through hole is in a convex shape.
